# EUROPÄISCHE PATENTSCHRIFT

(11) **EP 0 855 844 B1**
(45) Veröffentlichungstag und Bekanntmachung des Hinweises auf die Patenterteilung: **18.07.2007**
(21) Anmeldenummer: 97119185.3
(22) Anmeldetag: 03.11.1997
(51) Int. Cl.: H04Q 11/04, H04Q 7/24

(54) **Einrichtung für ein Funksystem, insbesondere für Punkt-zu-Mehrpunkt-Verbindungen**
Apparatus for a radio system, in particular for point to multipoint connections
Dispositif pour un système radio, en particulier pour des connexions point à multipoint

(30) Priorität: 23.01.1997 DE 19702028
(43) Veröffentlichungstag der Anmeldung: 29.07.1998
(73) Patentinhaber: Ericsson AB, Stockholm (SE)
(72) Erfinder: Bruenle, Siegfried, 71573 Allmersbach (DE)
(74) Vertreter: Pellkofer, Dieter

(56) Entgegenhaltungen:
- EP-A- 0 587 980
- EP-A- 0 687 078
- EP-A- 0 755 164
- WO-A-97/36384
- US-A- 5 172 375
- WALKE B ET AL: "WIRELESS ATM: AIR INTERFACE AND NETWORK PROTOCOLS OF THE MOBILE BROADBAND SYSTEM" IEEE PERSONAL COMMUNICATIONS, IEEE COMMUNICATIONS SOCIETY, US, Bd. 3, Nr. 4, 1. August 1996 (1996-08-01), Seiten 50-56, XP000623675 ISSN: 1070-9916

## Beschreibung

### Stand der Technik

Die Erfindung geht aus von einer Einrichtung für ein Funksystem insbesondere für Punkt-zu-Mehrpunkt-Verbindungen zwischen einer Zentralstation und Funkteilnehmern, wobei die Übertragung in einem Funkrahmen mittels Zeitschlitzen erfolgt, die Vielfache einer Grundbitrate darstellen.

Aus der DE 44 26 183 C1 ist ein Richtfunksystem für Punkt-zu-Mehrpunkt-Verbindungen bekannt, bei dem die für die Kommunikation zwischen einer Zentralstation und mehreren Teilnehmern zur Verfügung stehenden Frequenzkanäle bedarfsweise zuteilbar sind. Die Bandbreite der einzelnen Frequenzkanäle ist dort auf die von den einzelnen Teilnehmern jeweils geforderte Datenübertragungsrate einstellbar. Dieses System läßt eine flexible, an den Bedarf der Teilnehmer angepaßte Übertragungskapazität zu.

Die EP-A-0 755 164 offenbart ferner ein kabelloses ATM-Kommunikationssystem, welches eine Basisstation und wenigstens eine entfernte Station aufweist. Bei dem System werden Datenpakete über eine kabellose Verbindung zwischen der Basisstation und der entfernten Station übertragen.

Aus der EP-A-0 587 980 ist außerdem ein zellulares Mobilfunksystem bekannt, welches einen ATM-Betrieb unterstützt.

### Vorteile der Erfindung

Die Einrichtung gemäß den Merkmalen des Anspruchs 1 erweitert ein auf Zeitschlitzübertragung basierendes Funksystem, insbesondere ein auf n*64 Kbit/s-basierendes Funksystem, für die Übertragung von paket- oder zellorientierten Daten bzw. Diensten, beispielsweise von ATM-Zellen, wobei die flexible Zuteilung der Übertragungskapazität sowohl für eine Zeitschlitzübertragung mit beispielsweise n*64 Kbit/s- Zeitschlitzen als auch für die paket- oder zellorientierten Daten gewährleistet ist. Die Erfindung erlaubt die Nutzung der Konzentrationsfähigkeit von ATM auch in einem Anschlußnetz mit insbesondere Punkt-zu-Mehrpunkt-Verbindungen. Die Einrichtung gemäß der Erfindung eignet sich vorteilhaft für den Einsatz bei Telearbeitsplätzen mit flexibel zuteilbarer Übertragungskapazität.

### Zeichnungen

Anhand der Zeichnungen werden Ausführungsbeispiele der Erfindung näher erläutert. Es zeigen
Figur 1 ein Blockschaltbild für ein Modem für die Übertragung von Zeitschlitzen und ATM-Zellen,
Figur 2 eine Einrichtung zur dynamischen Bitraten-Erhöhung für ATM-Zellen.

### Beschreibung von Ausführungsbeispielen

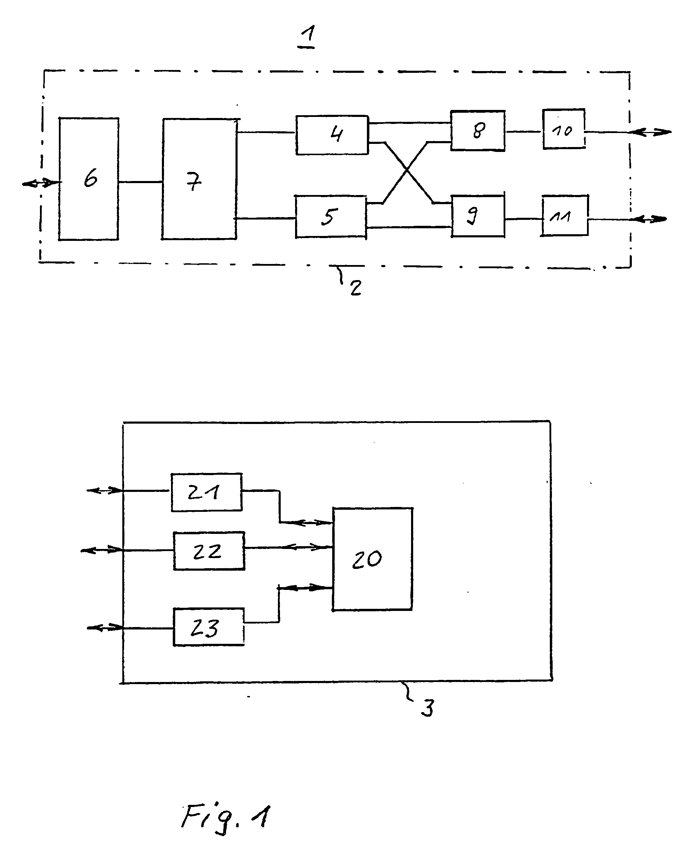

In Figur 1 ist ein Funkteilnehmer 1 mit einem Modem 2 einer Einrichtung für ein Funksystem insbesondere für Punkt-zu-Mehrpunkt-Verbindungen, dargestellt. Sowohl die Zentralstation 3 als auch die einzelnen Funkteilnehmer 1, die Einzel-oder Sammelanschlüsse sein können, weisen jeweils solche Modems auf. Die Zentralstation 3 weist so viele parallel geschaltete Modems 21, 22, 23 auf, wie maximal Funkteilnehmer eine Funkverbindung mit der Zentralstation 3 aufnehmen können. Das hier benutzte Punkt-zu-Mehrpunkt-Funksystem basiert auf der Übertragung von n*64 Kbit/s-Zeitschlitzen in einem Funkrahmen von z.B. 2Mbit/s, d.h. 32*64 Kbit/s. Die Zeitschlitze sind so gewählt, daß sie Vielfache der Grundbitrate 64 Kbit/s darstellen. Durch DBA (Dynamic-Bandwidth-Allocation) werden dabei nur die aktiven Zeitschlitze übertragen. Neben der DBA-Konzentrationsfunktion der Zeitschlitze n*64 Kbit/s ist auch für die paket- oder zellorientierten Dienste, z.B. die ATM-Zellen, eine solche DBA-Konzentrationsfunktion vorgesehen. In einem Übertragungssystem können entweder eine der DBA-Konzentrationsfunktionen einzeln oder aber beide Konzentrationsfunktionen parallel, wie das Ausführungsbeispiel von Figur 1 zeigt, vorhanden sein.

Die Variation der Übertragungskapazität für eine dynamische, d. h. während einer bestehenden Funkverbindung änderbare Zuteilung, insbesondere der Bitrate, auf einem Funkweg zwischen Funkteilnehmer und Zentralstation 3 wird gesteuert durch Messung der Verkehrsintensität, die sich aus der Anzahl der empfangenen Datenpakete oder beispielsweise ATM-Zellen und/oder Zeitschlitzen während einem vorgegebenen Zeitabschnitt bestimmen läßt.

Das Modem 2 weist zwei externe Schnittstellen auf, beispielsweise für 1*2 Mbit/s für n*64 kbit-Zeitschlitze und 1*10 Mbit/s für ATM-Zellen. Alternativ kann, wie in Figur 1 gezeigt, nur ein Schnittstellenblock 6 für ein zusammengefaßtes Zeitschlitz-ATM-Übertragungssignal von 1*12 Mbit/s vorgesehen sein. Ein Multiplexer 7 trennt das von der Funkschnittstelle 6 kommende Signal auf in die Datenströme n*64 kbit/s und ATM. In der Gegenrichtung faßt ein Multiplexer die beiden ankommenden Signale zu einem Datenstrom zusammen. Die voneinander getrennten Zeitschlitz-/ATM-Signale werden jeweils einem Modul 4 bzw. 5 zugeführt, in welchem die dynamische Bitratenzuteilung für den Zeitschlitz- bzw. den ATM-Datenstrom vorgenommen wird. Die beiden Ausgänge der Module 4 und 5 werden in zwei Multiplexern 8 und 9 zusammengefaßt durch direkte und Überkreuzkopplungen, wie in Figur 1 dargestellt. Am Ausgang jedes dieser Multiplexer ist ein Modulator 10 bzw. 11 vorgesehen zur Aufbereitung der jeweiligen Sendesignale und Umsetzung in die RF-Lage. In Gegenrichtung (Empfangsrichtung) trennen die Multiplexer 8 und 9 das von einem Modulator kommende Signal auf die Datenströme n*64 kBit/s und ATM auf.

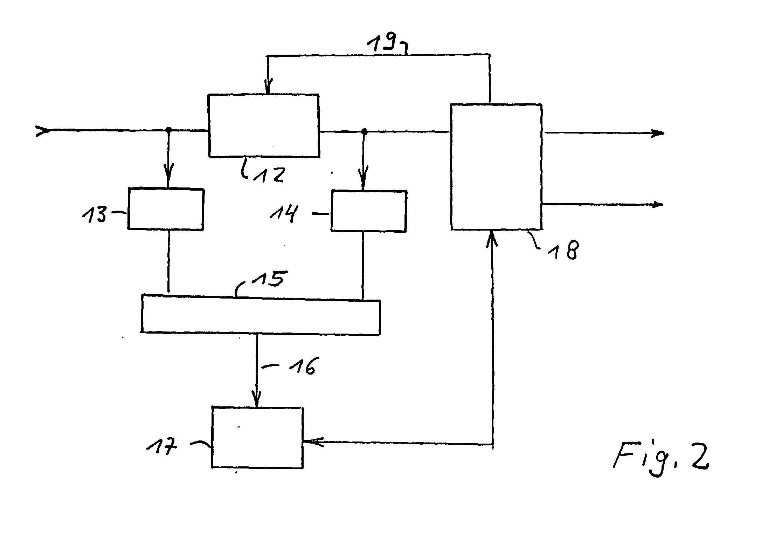

Der Aufbau des Moduls 5, d. h. des Moduls zur Erfassung und Auswertung von ATM-Zellen ist im einzelnen in Figur 2 dargestellt. Die empfangenen ATM-Zellen von der Schnittstelle 6 werden in einen Speicher 12 eingeschrieben und es wird der Füllstand dieses Speichers 12 ermittelt. Dazu ist jeweils ein Zellenzähler 13 bzw. 14 am Eingang und Ausgang des Speichers vorgesehen. Über eine Vergleichseinrichtung 15 für die Zählerstände wird festgestellt, ob die Bitrate zu erhöhen ist. Ist die Anzahl an empfangenen ATM-Zellen pro Zeitabschnitt größer als die Anzahl der an der Funkschnittstelle sendbaren ATM-Zellen, wird ein Schwellwert der Vergleichseinrichtung 15 überschritten und es wird ein REQUEST-Signal 16 für die Erhöhung der Bitrate an die Modem-Steuerung 17 gesendet. Diese Modem-Steuerung 17 kommuniziert mit der Funkverkehrssteuereinrichtung 20 der Zentralstation 3 über Steuerzellen und/oder Funküberrahmen. Der Block 18 zur Bitratenänderung erhöht oder verkleinert die Bitrate um die von der Modem-Steuerung 17 vorgegebenen Größe. Außerdem synchronisiert er das Auslesen des Speichers 12 über die Steuerleitung 19 angepaßt an die eingestellte Bitrate. Darüberhinaus erzeugt der Block 18 aus den Steuerinformationen von der Modem-Steuerung 17 Steuerzellen, die in den ATM-Datenstrom eingemischt werden, und steuert die DBA-Funktion, d. h. realisiert eine bitfehlerfreie Umschaltung.

Im Modul 4 kann eine entsprechende Auswertung für die Zeitschlitze erfolgen. Hier können entsprechend der Zeitschlitzauswertung mehr oder weniger Zeitschlitze und/oder Übertragungskanäle über die Modem-Steuerung zugeteilt werden.

Da bei ATM unterschiedliche Klassen von Diensten vorgesehen sind, z. B. zeitkritische Dienst wie POTS, ISDN oder Video-übertragung mit Synchroninformation und auch zeitunkritische Dienste wie z. B. Datenübertragung, werden unterschiedliche Übertragungskonzepte verwendet.

Für zeitkritische Dienste steht zwischen einem Funkteilnehmer 1 und der Zentralstation 3 immer ein Grundkanal zur Verfügung. Die Übertragungskapazität, d. h. die Bitrate oder Bandbreite dieses Grundkanals bestimmen sich aus den zeitbedingungen, Synchronität und Anzahl an benötigten Steuerzellen. Bei Bedarf kann die Bitrate eines Grundkanals erhöht werden.

Durch die Verwendung eines Grundkanals spielt es keine Rolle, daß die Synchronisierung zur Erhöhung der Bandbreite, z.B. 300 ms dauert, da durch den Grundkanal zeitkritische Zellen sofort gesendet werden können.

Für zeitunkritische Dienste kann zwischen Funkteilnehmer und Zentralstation immer ein kleiner Grundkanal für Steuerzellen zur Verfügung stehen, dessen Bitrate bedarfsweise erhöht werden kann. Alternativ hierzu, d. h. bei Fehlen eines Grundkanals, kann die Bandbreitenanforderung über einen Funküberrahmen erfolgen. Der Ablauf zur Erhöhung der Bitrate kann wie folgt vorgenommen werden: Der Empfänger auf einem Modem 2 stellt fest, daß die Anzahl der empfangenen ATM-Zellen größer ist als die Anzahl der an der Funkschnittstelle über den Grundkanal sendbaren ATM-Zellen. Der Empfänger sendet über eine Steuerzelle oder über einen Funküberrahmen ein Anforderungssignal REQUEST an die Funkverkehrssteuereinrichtung RASCO (Radio System Controller) 20 der Zentralstation 3 mit der Bitte um eine höhere Bitrate. Da von mehreren Empfängern gleichzeitig so ein REQUEST eingehen kann arbeitet der RASCO mit Hilfe eines Kollisionsprotokolls diese RE-QUESTs ab und erhöht ggf. die Bandbreite auf einem Link. Die erhöhte Bandbreite bleibt bestehen
- entweder eine bestimmte Zeit (z. B. maximal 500 ms)
- oder solange, bis die Kapazität des Grundkanals allein wieder ausreichend ist,
- oder bis der RASCO die Erhöhung zurücknimmt (z. B. daß Links mit höheren Prioritäten Zellen senden können).

Wie das Ausführungsbeispiel von Figur 1 zeigt, gibt es in jedem Modem zwei Sende- und zwei Empfangskanäle, die jeweils über die direkte und kreuzweise Verkopplung von den Modulen 4 und 5 gespeist werden. Die Signalübertragung erfolgt immer nur in einem Sende- und einem Empfangskanal, der andere Sende- und Empfangskanal ist dann nicht aktiv. Wenn die Steuereinrichtung 17 eine Anforderung für eine Änderung der Übertragungsrate erhält und sie darauf die Übertragungsparameter dementsprechend neu berechnet, gibt sie ihre neuen Übertragunsparameter als Steuersignale an die betreffenden Schaltblöcke des nicht in Betrieb befindlichen Sende- und Empfangskanals ab. Sobald die neuen Übertragungsparameter in den betreffenden Modems 21, 22 ,23 der Zentralstation eingestellt worden sind und auch die Funkteilnehmer die Aquisition der neuen Übertragungsparameter über den Signalisierungskanal (Grundkanal oder Funkübertragungsrahmen) bei der Steuereinrichtung 20 bestätigt haben, wird die Signalübertragung und -verarbeitung in allen betroffenen Modems in dem anderen Signalpfad, in dem die Umstellung auf die geänderten Übertragungsparameter erfolgt ist, fortgesetzt. Wenn also eine Änderung der Übertragungsparameter nötig ist, weil z. B. ein oder mehrere zusätzliche Übertragungskanäle oder erhöhte Bitraten angefordert werden oder ein anderer Bedarf an Frequenzbändern oder Bitraten vorliegt, wird die Signalübertragung so lange mit alten Übertragungsparametern fortgeführt, bis die neuen Übertragungsparameter in dem noch nicht aktivierten Sende- bzw. Empfangskanal eingestellt worden sind, und es wird erst dann auf diesen Kanal umgeschaltet, wenn die Übertragung sichergestellt ist (Setup before Brake). Dadurch werden störende Unterbrechungen bei der Signalübertragung vermieden.

## Patentansprüche

1. Einrichtung für ein Funksystem, insbesondere für Punkt-zu-Mehrpunkt-Verbindungen zwischen einer Zentralstation (3) und Funkteilnehmern (1), wobei die Übertragung in einem Funkrahmen mittels Zeitschlitzen erfolgt, die Vielfache einer Grundbitrate darstellen, und wobei Mittel (4, 5) für eine zusätzliche Übertragung von paket- oder zellorientierten Daten sowie Mittel für eine dynamische, d. h. während einer bestehenden Funkverbindung änderbare, Zuteilung der Übertragungskapazität in Abhängigkeit der Verkehrsintensität bei übertragenen Zeitschlitzen und/oder der Anzahl von Datenpaketen oder -zellen vorgesehen sind,
**dadurch gekennzeichnet, daß** jedem Funkteilnehmer (1) ein Modem (2) mit zwei Sende- und zwei Empfangskanälen zugeordnet ist, wobei die Signalübertragung im Modem (2) nur über einen der beiden Sende- bzw. Empfangskanäle erfolgt, daß bei Änderung der Übertragungskapazität aufgrund eines Anforderungssignals der jeweils nicht in Betrieb befindliche Sende- bzw. Empfangskanal die Aquisition der neuen Übertragungskapazität vornimmt, während die Übertragung in dem bisher verwendeten Sende- bzw. Empfangskanal so lange fortgesetzt wird, bis nach abgeschlossener Aquisition eine bitfehlerfreie Umschaltung auf den bisher nicht benutzten Sende- bzw. Empfangskanal erfolgt.

2. Einrichtung nach Anspruch 1, **dadurch gekennzeichnet, daß** einem Funkteilnehmer (1) ein Modul (5) zur Erfassung und Auswertung von Datenpaketen oder Zellen, beispielsweise ATM-Zellen, innerhalb eines vorgegebenen Zeitabschnittes zugeordnet ist und zur Ausgabe eines Anforderungssignals für eine Erhöhung der Übertragungskapazität, wenn die Anzahl der pro Zeitabschnitt empfangenen Datenpakete oder Zellen einen Schwellwert überschreitet.

3. Einrichtung nach Anspruch 1 oder 2, **dadurch gekennzeichnet, daß** zur Veränderung der Übertragungskapazität die Bitrate und/oder Bandbreite einer Sendeeinrichtung eines Funkteilnehmers (1) umschaltbar ist.

4. Einrichtung nach einem der Ansprüche 1 bis 3, **dadurch gekennzeichnet, daß** ein Multiplexer (7) vorgesehen ist, der das von einer Funkschnittstelle des Funkteilnehmers (1) gelieferte Signal in Datenströme der Zeitschlitzübertragung und der ATM-Zellen auftrennt und in Gegenrichtung die vom Funkteilnehmer (1) angelieferten Datenströme für die Zeitschlitzübertragung und Übertragung der ATM-Zellen zu einem Datenstrom zusammenfaßt.

5. Einrichtung nach einem der Ansprüche 1 bis 4, **dadurch gekennzeichnet, daß** zur Anforderung von Übertragungskapazität zwischen einem Funkteilnehmer (1) und der Zentralstation (3) ein Grundkanal für Steuerzellen zur Verfügung steht.

6. Einrichtung nach einem der Ansprüche 1 bis 4, **dadurch gekennzeichnet, daß** zur Anforderung von Übertragungskapazität zwischen einem Funkteilnehmer (1) und der Zentralstation (3) ein Funküberrahmen vorgesehen ist.

7. Einrichtung nach einem der Ansprüche 1 bis 6, **dadurch gekennzeichnet, daß** das Modem (2) jeweils eine Einrichtung (4, 5) zur dynamischen Zuteilung von Übertragungskapazität sowohl für die Zeitschlitze als auch für die ATM-Zellen aufweist.

8. Einrichtung nach Anspruch 7, **dadurch gekennzeichnet, daß** die Einrichtungen (4, 5) zur dynamischen Zuteilung von Übertragungskapazität ausgangsseitig mit jeweils einem Eingang eines ersten und zweiten Multiplexers (8, 9) verbunden sind derart, daß mit jedem Multiplexer (8, 9) sowohl die Zeitschlitze als auch die ATM-Zellen zu einem Datenstrom zusammenfaßbar bzw. in Gegenrichtung in Zeitschlitze und ATM-Zellen auftrennbar sind.

9. Einrichtung nach einem der Ansprüche 2 bis 8, **dadurch gekennzeichnet, daß** das Modul (5) zur Auswertung der ATM-Zellen folgende Baugruppen aufweist:
- Einen Speicher (12), mittels dessen übertragene ATM-Zellen speicherbar sind,
- jeweils einen Zellenzähler (13, 14) für ATM-Zellen am Eingang und am Ausgang des Speichers (12),
- eine Vergleichseinrichtung (15) für die Zählerstände der Zellenzähler (13, 14),
- eine Modem-Steuerung (17), die in Abhängigkeit des Ergebnisses der Vergleichseinrichtung (15) ein Steuersignal für eine Bitratenerhöhung/-erniedrigung an eine Einrichtung zur Bitratenänderung (18) leitet.

10. Einrichtung nach Anspruch 9, **dadurch gekennzeichnet, daß** von der Einrichtung zur Bitratenänderung (18) eine Synchronisierung des Auslesens des Speichers (12) erfolgt.

11. Einrichtung nach Anspruch 9 oder 10, **dadurch gekennzeichnet, daß** die Modemsteuerung (17) über einen Funkkanal mit der Zentralstation (3) in Verbindung steht zur Abgabe des Anforderungssignals für eine höhere Übertragungskapazität bzw. Bitrate.

12. Einrichtung nach Anspruch 11, **dadurch gekennzeichnet, daß** in der Zentralstation (3) Mittel vorgesehen sind zur Abarbeitung der Anforderungssignale verschiedener Funkteilnehmer (1) mittels eines Kollisionsprotokolls.

13. Einrichtung nach Anspruch 12, **dadurch gekennzeichnet, daß** Mittel vorgesehen sind zur Aufrechterhaltung der zugeteilten erhöhten Übertragungskapazität entweder für eine vorgegebene Zeit oder so lange bis die Übertragungskapazität eines Grundkanals allein wieder ausreichend ist.

14. Einrichtung nach Anspruch 12, **dadurch gekennzeichnet, daß** Mittel vorgesehen sind zur Aufrechterhaltung der zugeteilten Übertragungskapazität so lange bis die Steuereinrichtung (20) der Zentralstation (3) die zugeteilte Übertragungskapazität zurücknimmt.

## Claims

1. A device for a radio-communication system, in particular for point-to-multipoint connections between a central station (3) and radio-communication subscribers (1), wherein the transmission is carried out in a radio-communication frame using time slots which represent multiples of a basic bit rate, and wherein means (4, 5) are provided for an additional transmission of packet-oriented data or cell-oriented data and means are provided for a dynamic assignment, i.e. an assignment variable during an existing radio-communication link, of the transmission capacity in dependence on the traffic intensity in transmitted time slots and/or on the number of data packets or cells,
**characterized in that** each radio-communication subscriber (1) has a modem (2) assigned with two transmitting channels and two receiving channels, with the signal transmission in the modem (2) being carried out on only one of the two transmitting/ receiving channels; **in that**, on a change in the transmission capacity based on a request signal, the respective transmitting/receiving channel not in operation carries out the acquisition of the new transmission capacity, while the transmission in the previously used transmitting/ receiving channel is continued until, after a completed acquisition, a switch-over free of bit errors is made to the previously unused transmitting/receiving channel.

2. A device in accordance with claim 1, **characterized in that** a module (5) for recording and evaluating data packets or cells, for example ATM cells, within a prescribed time period, and for outputting a request signal to increase the transmission capacity when the number of the data packets or cells per time period exceeds a threshold value, is assigned to a radio-communication subscriber.

3. A device in accordance with claim 1 or claim 2, **characterized in that**, to change the transmission capacity, the bit rate and/or the bandwidth of a transmitter of a radio-communication subscriber (1) is switchable.

4. A device in accordance with any one of the claims 1 to 3, **characterized in that** a multiplexer (7) is provided which separates the signal supplied by a radio interface of the radio-communication subscriber (1) into data streams of the time slot transmission and of the ATM cells, and, in a return direction, compresses into one data stream the data streams delivered by the radio-communication subscriber (1) for the transmission of the time slots and the transmission of the ATM cells.

5. A device in accordance with any one of the claims 1 to 4, **characterized in that** a basic channel for control cells is provided to request transmission capacity between a radio-communication subscriber (1) and the central station (3).

6. A device in accordance with any one of the claims 1 to 4, **characterized in that** a radio multiframe is provided to request transmission capacity between a radio-communication subscriber (1) and the central station (3).

7. A device in accordance with any one of the claims 1 to 6, **characterized in that** the modem (2) in each case has a device (4, 5) for the dynamic assignment of transmission capacity, both for the time slots and for the ATM cells.

8. A device in accordance with claim 7, **characterized in that** the devices (4, 5) for the dynamic assignment of transmission capacity are connected in each case, on an output side, to an input of a first and second multiplexer (8, 9) such that, with each multiplexer (8, 9), both the time slots and the ATM cells are compressed into one data stream and are separable, in a return direction, into the time slots and the ATM cells.

9. A device in accordance with any one of the claims 2 to 8, **characterized in that** the module (5) has the following components for the evaluation of the ATM cells:
- a storage device (12) by means of which its transmitted ATM cells can be stored;
- a respective cell counter (13, 14) for ATM cells at the input and at the output of the storage device (12);
- a comparator device (15) for the counts of the cell counter (13, 14);
- a modem control (17) which, in dependence on the result of the comparator device (15), directs a control signal to a device for altering the bit rate (18) to increase/decrease the bit rate.

10. A device in accordance with claim 9, **characterized in that** a synchronization of the reading of the storage device (12) is carried out by the device for altering the bit rate (18).

11. A device in accordance with claim 9 or claim 10, **characterized in that** the modem control (17) is in communication with the central station (3) via a radio-communication channel to transmit the request signal for a higher transmission capacity or bit rate.

12. A device in accordance with claim 11, **characterized in that** means are provided in the central station (3) for working through the request signals of different radio-communication subscribers (1) using a collision protocol.

13. A device in accordance with claim 12, **characterized in that** means are provided for maintaining the assigned increased transmission capacity either for a predetermined time period or for so long until the transmission capacity of a basic channel is again sufficient by itself.

14. A device in accordance with claim 12, **characterized in that** means are provided for maintaining the assigned transmission capacity for so long until the control device (20) of the central station (3) cancels the assigned transmission capacity.

## Revendications

1. Dispositif pour un système radio, en particulier pour des connexions point-multipoint entre une station centrale (3) et des abonnés (1), dans lequel la transmission s'effectue dans une trame radio au moyen de fenêtres temporelles qui représentent des multiples d'un débit binaire de base, et dans lequel sont prévus des moyens (4, 5) pour une transmission supplémentaire de données par paquets ou par cellules ainsi que des moyens pour une attribution dynamique, c'est-à-dire variable pendant une connexion radio existante, de la capacité de transmission en fonction de l'intensité de trafic pour les fenêtres temporelles transmises et/ou en fonction du nombre de paquets ou de cellules de données,
**caractérisé en ce qu'**à chaque abonné (1) est attribué un modem (2) comportant deux canaux d'émission et deux canaux de réception, la transmission des signaux dans le modem (2) s'effectuant via un seul des deux canaux d'émission ou de réception, **en ce que** lors d'une modification de la capacité de transmission suite à un signal de requête, le canal d'émission ou de réception respectif non en service procède à l'acquisition de la nouvelle capacité de transmission, tandis que la transmission dans le canal d'émission ou de réception utilisé jusqu'alors est poursuivie jusqu'à ce qu'il s'effectue, après achèvement de l'acquisition, une commutation exempte d'erreur de bit vers le canal d'émission ou de réception jusqu'alors non utilisé.

2. Dispositif selon la revendication 1, **caractérisé en ce qu'**à un abonné (1) est attribué un module (5) pour saisir et évaluer des paquets de données ou des cellules, par exemple des cellules ATM, à l'intérieur d'une période temporelle prédéterminée, et pour émettre un signal de requête pour une augmentation de la capacité de transmission, lorsque le nombre de paquets de données ou de cellules reçus par période temporelle dépasse une valeur seuil.

3. Dispositif selon la revendication 1 ou 2, **caractérisé en ce que** pour modifier la capacité de transmission, le débit binaire et/ou la largeur de bande d'un dispositif d'émission d'un abonné (1) est variable.

4. Dispositif selon l'une des revendications 1 à 3, **caractérisé en ce qu'**il est prévu un multiplexeur (7) qui subdivise le signal, fourni par une interface radio de l'abonné (1), en flux de données de la transmission à fenêtre temporelle et des cellules ATM et qui, en sens opposé, réunit en un flux de données les flux de données fournis par l'abonné (1) pour la transmission à fenêtre temporelle et pour la transmission des cellules ATM.

5. Dispositif selon l'une des revendications 1 à 4, **caractérisé en ce qu'**un canal de base pour des cellules de commande est disponible pour la requête d'une capacité de transmission entre un abonné (1) et la station centrale (3).

6. Dispositif selon l'une des revendications 1 à 4, **caractérisé en ce qu'**il est prévu une trame radio maître pour la requête d'une capacité de transmission entre un abonné (1) et la station centrale (3).

7. Dispositif selon l'une des revendications 1 à 6, **caractérisé en ce que** le modem (2) comprend un moyen respectif (4, 5) pour l'attribution dynamique d'une capacité de transmission aussi bien aux fenêtres temporelles qu'aux cellules ATM.

8. Dispositif selon la revendication 7, **caractérisé en ce que** les moyens (4, 5) pour l'attribution dynamique d'une capacité de transmission sont reliés du côté sortie chacun à une entrée d'un premier et d'un second multiplexeur (8, 9), de telle sorte qu'au moyen de chaque multiplexeur (8, 9), aussi bien les fenêtres temporelles que les cellules ATM peuvent être réunies en un flux de données ou, en sens opposé, être subdivisées en fenêtres temporelles et en cellules ATM.

9. Dispositif selon l'une des revendications 2 à 8, **caractérisé en ce que** le module (5) destiné à évaluer les cellules ATM comprend les sous-ensembles suivants :
- une mémoire (12) permettant de mémoriser des cellules ATM transmises,
- un compteur de cellule respectif (13, 14) pour des cellules ATM à l'entrée et à la sortie de la mémoire (12),
- un moyen de comparaison (15) pour les niveaux des compteurs de cellule (13, 14),
- une commande de modem (17) qui, en fonction du résultat du moyen de comparaison (15), achemine un signal de commande pour une augmentation/réduction du débit binaire à un moyen destiné à la modification du débit binaire (18).

10. Dispositif selon la revendication 9, **caractérisé en ce que** le moyen destiné à modifier le débit binaire (18) exécute une synchronisation de la lecture de la mémoire (12).

11. Dispositif selon la revendication 9 ou 10, **caractérisé en ce que** la commande de modem (17) est en liaison avec la station centrale (3) via un canal radio pour émettre le signal de requête en vue d'une augmentation de la capacité de transmission ou du débit binaire.

12. Dispositif selon la revendication 11, **caractérisé en ce que** dans la station centrale (3) sont prévus des moyens pour traiter les signaux de requête de différents abonnés (1) au moyen d'un protocole de collision.

13. Dispositif selon la revendication 12, **caractérisé en ce qu'**il est prévu des moyens pour maintenir la capacité de transmission augmentée attribuée soit pour un temps prédéterminé soit jusqu'à ce que la capacité de transmission d'un canal de base à elle seule suffise de nouveau.

14. Dispositif selon la revendication 12, **caractérisé en ce qu'**il est prévu des moyens pour maintenir la capacité de transmission attribuée jusqu'à ce que le dispositif de commande (20) de la station centrale (3) réduise la capacité de transmission attribuée.
